# NEUE EUROPÄISCHE PATENTSCHRIFT

(11) **EP 1 112 882 B2**
(45) Veröffentlichungstag und Bekanntmachung des Hinweises auf die Entscheidung über den Einspruch: **19.11.2008**
(45) Hinweis auf die Patenterteilung: 06.05.2004
(21) Anmeldenummer: 00128667.3
(22) Anmeldetag: 28.12.2000
(51) Int. Cl.: B60J 7/20

(54) **Cabriolet-Fahrzeug**
Convertible vehicle
Véhicule convertible

(30) Priorität: 29.12.1999 DE 19963668
(43) Veröffentlichungstag der Anmeldung: 04.07.2001
(73) Patentinhaber: Wilhelm Karmann GmbH, 49084 Osnabrück (DE)
(72) Erfinder: Maass, Joachim, 49143 Bissendorf (DE)
(74) Vertreter: Busse & Busse Patentanwälte

(56) Entgegenhaltungen:
- DE-A- 19 712 967
- DE-A- 19 714 105
- DE-A- 19 813 290
- DE-C- 3 903 679
- DE-C- 19 637 005
- DE-U- 29 802 871

## Beschreibung

Die Erfindung betrifft ein Cabriolet-Fahrzeug mit einem unterhalb eines Deckelteils ablegbaren Dach nach dem in DE 3903679C offenbarten Oberbegriff des Anspruchs 1.

Bei derartigen Cabriolet-Fahrzeugen ist es wünschenswert, eine Durchtrittsöffnung für die seitlichen Gestängeteile im geöffneten Zustand des Daches vollständig abzudecken, um dadurch unansehnliche Schachtöffnungen, die von oben zugänglich sind, zu vermeiden. Im geschlossenen Zustand des Daches müssen Öffnungen zur Verfügung stehen, die zumindest den Durchtritt der seitlichen Hauptgestängeteile erlauben. Die Öffnungen sollen möglichst klein gehalten werden, um den Innenraum so wenig wie möglich zu beeinträchtigen. Andererseits ist bei vielen Verdecken zur Öffnung eines hinteren Spannbügels eine relativ große Durchtrittsöffnung erforderlich, insbesondere wenn der oder die Spannbügel ein nach innen ragendes Totpunktgestänge aufweisen.

Der Erfindung liegt das Problem zugrunde, einerseits eine möglichst kleine Durchtrittsöffnung bei geschlossenem Dach und andererseits eine hinreichend große Durchtrittsöffnung während dessen Öffnung zur Verfügung zu stellen.

Die Erfindung löst dieses Problem mit den Merkmalen des Anspruchs 1. Hinsichtlich weiterer vorteilhafter Ausgestaltungen der Erfindung wird auf die Ansprüche 2 bis 8 verwiesen.

Durch die Ausbildung mehrerer Teilabschnitte von Verkleidungsteilen für jede Fahrzeugseite können unterschiedliche Öffnungszustände des Daches bei jeweils angepaßten Öffnungzuständen der Teilabschnitte ermöglicht werden, so daß immer nur so viel Durchtrittsöffnung freigegeben ist, wie für den jeweiligen Öffnungszustand erforderlich ist. Insbesondere bei geschlossenem Dach müssen nicht sämtliche Verkleidungsteile geöffnet sein, sondern die Durchtrittsöffnung kann auf einem Maß gehalten werden, das lediglich den Durchtritt der seitlichen Hauptgestängeteile ermöglicht, wobei ein Durchtrittsbereich für Gestängeteile des oder der hinteren Spannbügel mittels eines weiteren Teilabschnitts der Verkleidungsteile abgedeckt bleiben kann. Besonders vorteilhaft kann dann der weitere Teilabschnitt während des Öffnens oder Schließens des hinteren Spannbügels geöffnet sein, wenn die maximale Durchtrittsbreite für Gestängeteile des Verdecks benötigt wird. Dadurch, daß ein Teilabschnitt der Verkleidungsteile mit dem Deckelteil verbunden ist, kann dieses bei geschlossenem Deckelteil entweder in einer bündigen Parallellage mit dem Deckelteil gehalten sein, wenn das Dach geöffnet ist, so daß dann eine vollständige Verkleidung der Durchtrittsöffnung erreicht ist, oder es kann bei geschlossenem Dach unter das Deckelteil eingeschwenkt sein, um somit den Durchtritt der seitlichen Gestängeteile des Daches zu ermöglichen. Der Teilabschnitt ist in dieser Stellung raumsparend untergebracht. Ein weiterer Teilabschnitt ist vorteilhaft mit der Karosserie verbunden, so daß er unabhängig von der Steuerung des Deckelteils seitlich auf- oder zuschwenken kann, um damit das Öffnen oder Schließen der hinteren Spannbügel zu ermöglichen.

Weitere Vorteile und Einzelheiten ergeben sich aus einem in der Zeichnung dargestellten Ausführungsbeispiel des Gegenstandes der Erfindung. In der Zeichnung zeigt:
- Fig. 1: eine schematisierte perspektivische Ansicht eines erfindungsgemäßen Cabriolet-Fahrzeugs mit einem nur bezüglich seiner tragenden Teile dargestellten Dach,
- Fig. 2: eine Teilansicht aus einer ähnlichen Perspektive wie in Fig. 1 auf den Bereich des rückwärtigen Deckelteils bei geöffnetem Dach,
- Fig. 3: den Ausschnitt III in Fig. 2,
- Fig. 4: eine ähnliche Ansicht wie Fig. 3 während der Schließphase des Daches,
- Fig. 5: eine ähnliche Ansicht wie Fig. 4 bei vollständig geschlossenem Dach,
- Fig. 6: eine perspektivische Ansicht der Verkleidungsteile im Öffnungszustand des Daches nach Fig. 4.

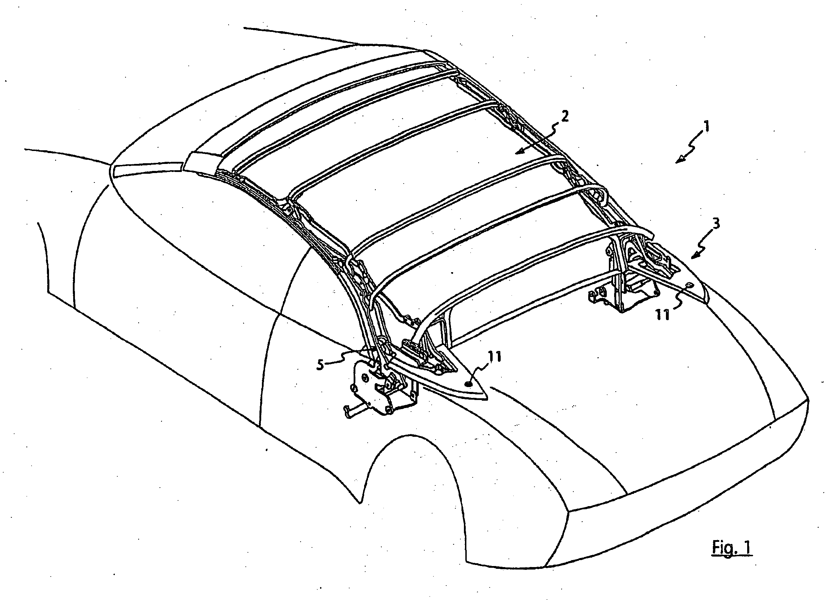

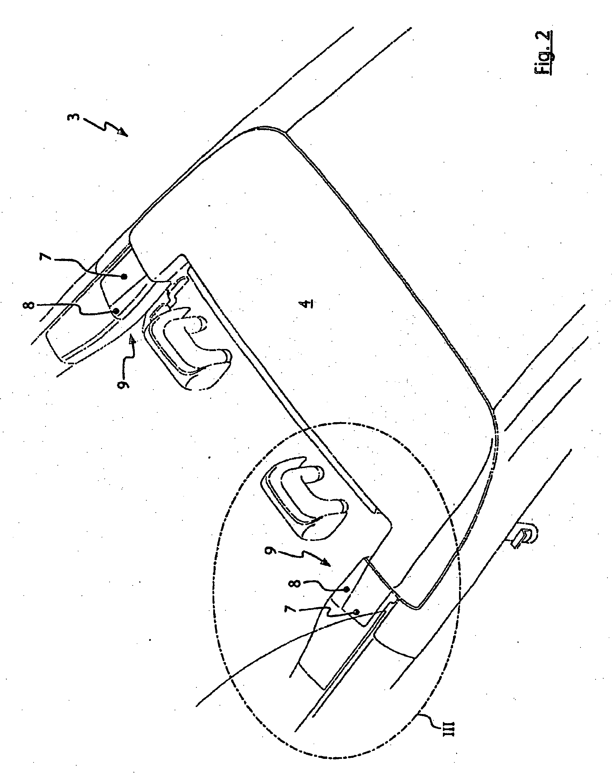

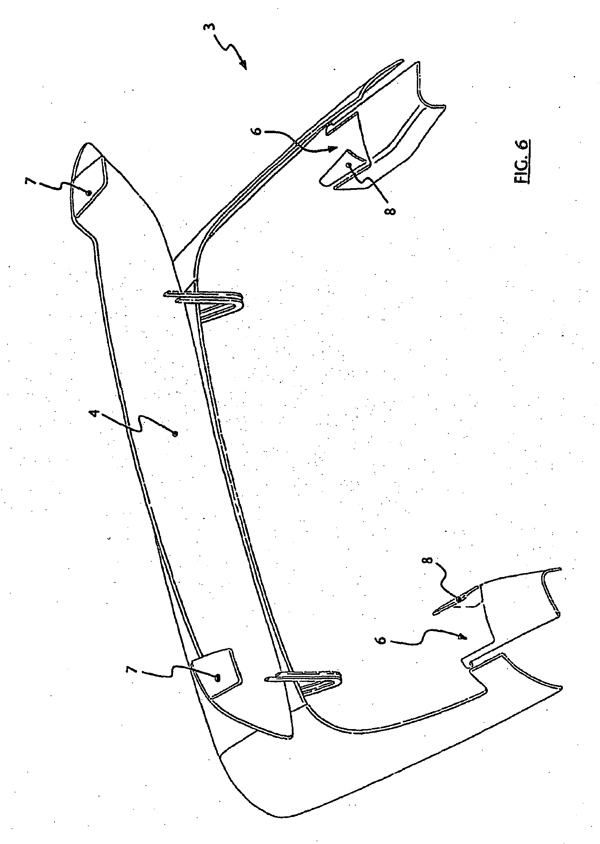

Im Ausführungsbeispiel weist das Cabriolet-Fahrzeug 1 ein textilbespanntes Dach 2 auf, das in einem rückwärtigem Fahrzeugbereich 3 unterhalb eines Deckelteils 4 ablegbar ist (Fig. 2). Im geschlossenen Zustand des Daches (Fig. 1) treten dabei seitliche Gestängeteile 5 durch die Ebene des Deckelteils 4 im Bereich seitlicher Durchtrittsöffnungen 6 hindurch (Fig. 6). Die Durchtrittsöffnungen 6 sind von Verkleidungsteilen 9 abdeckbar, die in Teilabschnitte 7, 8 aufgespalten und einzeln betätigbar sind, wobei sie je nach Öffnungs- oder Schließzustand des Daches 2 unterschiedliche Bereiche der Durchtrittsöffnungen 6 abdecken oder freigeben.

Im Ausführungsbeispiel sind die Verkleidungsteile 9 in die beiden Teilabschnitte 7 und 8 zweigeteilt. Es ist auch eine Unterteilung in mehr als zwei Teilabschnitte 7, 8 denkbar. Ebenso muß das Dach keine textile Bespannung aufweisen, sondern kann ganz oder teilweise feste Dachteile umfassen.

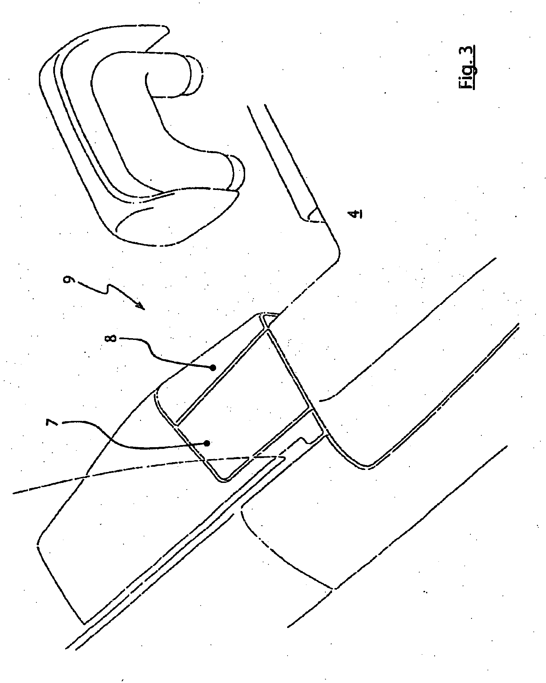

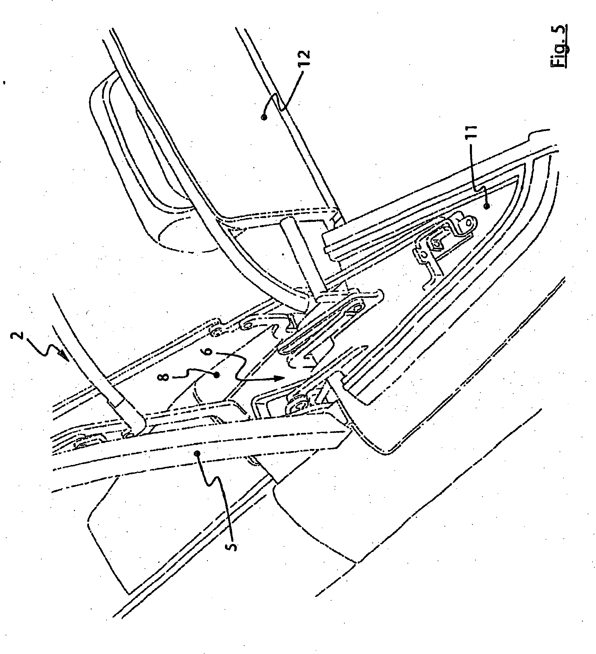

Während bei vollständig geöffnetem Dach (Fig. 3) beide Teilabschnitte 7, 8 der Verkleidungsteile 9 geschlossen sind, um einen optisch einheitlichen Eindruck zu erreichen, ist bei vollständig geschlossenem Dach 2 (Fig. 5) der mit dem Deckelteil 4 schwenkbeweglich verbundene Teilabschnitt 7 geöffnet, um den Durchtritt der Gestängeteile 5 zu ermöglichen. Der Teilabschnitt 8 kann hingegen geschlossen sein, da die volle Breite der Durchtrittsöffnung 6 in diesem Zustand nicht benötigt wird. Damit ist eine Verkleinerung der Durchtrittsöffnung 6 gegenüber herkömmlichen Fahrzeugen bei vollständig geschlossenem Dach 2 erreicht, was das optische Erscheinungsbild des Innenraums sowie die Sicherheit gegen ein Hineingreifen in mechanische Teile verbessert. Während des Aufschwenkens der Spannbügel 11, also während der Öffnungs- oder Schließphase des Daches 2, in der die volle Durchtrittsbreite der Öffnung 6 für die Gestängeteile 5 benötigt wird, ist auch der Teilabschnitt 8 geöffnet, im Unterschied zu bisherigen Lösungen wird damit die volle Durchtrittsbreite nur in den Momenten freigegeben, in denen sie wirklich benötigt wird. Damit ist der Teilabschnitt 8 der Verkleidungsteile 9 auch dann geöffnet wenn, bei im wesentlichen geschlossenem Dach, die Spannbügel 11 aufwärts gestellt sind. Im geöffneten Zustand ist der Teilabschnitt 7 raumsparend in eine parallel unter dem Deckelteil 4 liegende Stellung eingeschwenkt. Er ist dann nicht sichtbar und daher optisch nicht störend. Zudem ist eine einfache Schwenkmechanik, beispielsweise in Kopplung mit der Bewegung des Deckelteils 4, etwa über Bowdenzüge, einsetzbar.

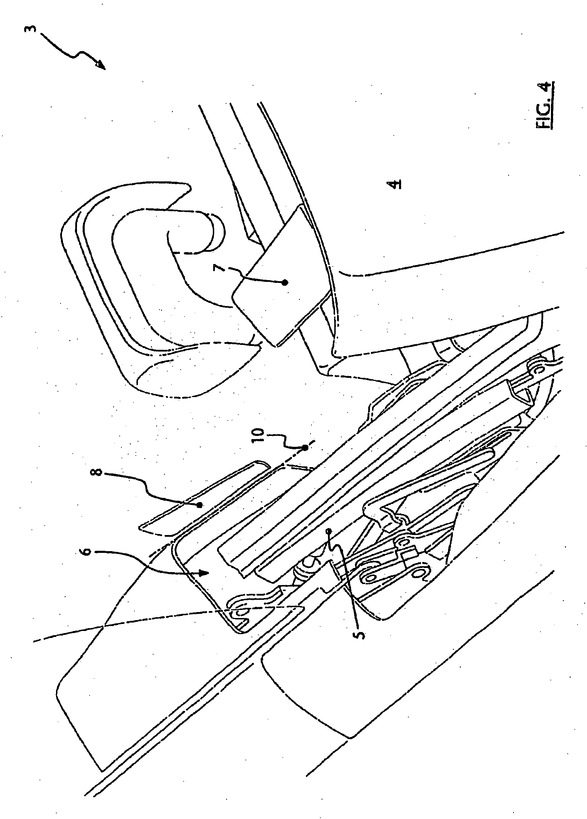

Der Teilabschnitt 7 ist mit dem Deckelteil 4 verbunden und liegt bei geöffnetem Dach bündig und parallel zu diesem, wohingegen er bei geschlossenem Dach zur Freigabe dieses Bereichs der Durchtrittsöffnung 6 unterhalb des Deckelteils 4 eingeschwenkt ist, wie in Fig. 4 zumindest angedeutet ist.

Der Teilabschnitt 8 ist um eine im wesentlichen dem Fahrzeuglängsverlauf folgende oder leicht zu diesem geneigte Achse 10 schwenkbar. Die Achse 10 liegt innenseitig der Verkleidungsteile 9. Im geöffnetem Zustand liegt der Teilabschnitt 8 der Verkleidungsteile 9 im wesentlichen hochkant und ist den Insassen zugewandt. Der Teilabschnitt 8 ist daher sowohl bei vollständig geöffnetem als auch vollständig geschlossenem Dach 2 geschlossen, wodurch von den Insassen aus eine optisch vorteilhafte und sicherheitsfördernde Teilabdeckung der Durchtrittsöffnung 6 erreicht ist.

Im Ausführungsbeispiel ist ein Cabriolet-Fahrzeug gezeigt, bei dem das Dach 2 heckseitig von zwei in Draufsicht im wesentlichen dreiecksförmigen Spannbügeln 11 begrenzt ist, denen eine Heckscheibe 12 in Fahrtrichtung F vorgeordnet und zwischengeordnet ist (Fig.5). Auch für andere Dachkonstruktionen kann eine Aufteilung der Verkleidungsteile 9 in die gezeigten Teilabschnitte 7, 8 sinnvoll sein. Für die Spannbügel 11 sind im Ausführungsbeispiel sogenannte Totpunktstangen vorgesehen, die für eine feste Anlage der Spannbügel 11 auf dem Deckelteil 4 bei geschlossenem Dach 2 sorgen. Insbesondere diese Totpunktstangen liegen innenseitig der Gestängeteile 5 für das Dach 2, wodurch bei deren Durchtritt durch die Ebene des Deckelteils 4 eine besonders große Durchtrittsöffnung 6 erforderlich wird.

Die Teilabschnitte 7, 8 der Verkleidungsteile 9 können insgesamt über Bowdenzüge betätigbar sein, diese können ihrerseits eine Zwangssteuerung erfahren, so daß eine automatisierte Öffnung bzw. ebenso ein automatisches Verschließen der Verkleidungsteile 9 während der Dachöffnung und des Schließens erfolgt, ohne daß es eines Zutuns eines Benutzers bedürfte.

Die Verkleidungsteile 9 können beispielsweise aus Blech oder Kunststoff bestehen, der mit üblichen Innenraumbezügen, wie etwa Leder o. dgl., bezogen ist.

## Patentansprüche

1. Cabriolet-Fahrzeug (1) mit einem im rückwärtigen Fahrzeugbereich (3) unterhalb eines Deckelteils (4) ablegbaren Dach (2), das zu seiner Verbindung mit unterhalb der Ebene des Deckelteils (4) liegenden Lagern seitliche Gestängeteile (5) aufweist, die bei geschlossenem Dach (2) durch die Ebene des Deckelteils (4) im Bereich von mittels Verkleidungsteilen (9) abdeckbaren Durchtrittsöffnungen (6) hindurchtreten, wobei die Verkleidungsteile (9) pro Fahrzeugseite mehrere Teilabschnitte (7; 8) umfassen, die einzeln je nach Öffnungszustand des Daches im Öffnungs- oder Schließsinn betätigbar sind, wobei zumindest ein Teilabschnitt (7) mit dem das Dach (2) in geöffneter Stellung überdeckenden Deckelteil (4) verbunden und gegenüber diesem beweglich ist und bei geöffnetem Dach (2) alle Teilabschnitte (7; 8) der Verkleidungsteile (9) verschlossen sind, **dadurch gekennzeichnet, daß** die Teilabschnitte (7; 8) einen in Fahrzeugquerrichtung äußeren, mit dem Deckelteil (4) verbundenen Teilabschnitt (7) und einen in Fahrzeugquerrichtung inneren Teilabschnitt (8) umfassen und daß bei vollständig geschlossenem Dach (2) zumindest der in Fahrzeugquerrichtung äußere Teilabschnitt (7) geöffnet und zumindest der dem Innenraum zugewandte innere Teilabschnitt (8) geschlossen ist, so daß immer nur soviel Durchtrittsbreite freigegeben ist, wie für den jeweiligen Öffnungszustand erforderlich ist, wobei der dem Innenraum zugewandte Teilabschnitt (8) seitlich auf- oder zuschwenken kann.

2. Cabriolet-Fahrzeug nach Anspruch 1, **dadurch gekennzeichnet, daß** in einem Öffnungszustand des Daches (2), bei dem ein oder mehrere dieses heckseitig begrenzende Spannbügel (11) aufgestellt ist oder sind, alle Teilabschnitte (7; 8) geöffnet sind.

3. Cabriolet-Fahrzeug nach Ansprüch 1 oder 2, **dadurch gekennzeichnet, daß** der mit dem Deckelteil (4) verbundene äußere Teilabschnitt (7) bei geöffnetem Dach (2) in einer bündigen Parallellage zu dem Deckelteil (4) gehalten ist.

4. Cabriolet-Fahrzeug nach Anspruch 3, **dadurch gekennzeichnet, daß** bei geschlossenem Dach (2) der mit dem Deckelteil (4) verbundene äußere Teilabschnitt (7) gegenüber diesem zur Freigabe einer Durchtrittsöffnung (6) eingeschwenkt ist.

5. Cabriolet-Fahrzeug nach einem der Ansprüche 1 bis 4, **dadurch gekennzeichnet, daß** der innere Teilabschnitt (8) um eine im wesentlichen dem Fahrzeuglängsverlauf folgende Achse (10) verschwenkbar ist, im geöffnetem Zustand hochkant liegt und den Insassen zugewandt ist.

6. Cabriolet-Fahrzeug nach Anspruch 5, **dadurch gekennzeichnet, daß** der dem Innenraum zugewandte Teilabschnitt (8) bei vollständig geöffnetem Dach und bei vollständig geschlossenem Dach (2) geschlossen ist.

7. Cabriolet-Fahrzeug nach einem der Ansprüche 5 oder 6, **dadurch gekennzeichnet, daß** der dem Innenraum zugewandte Teilabschnitt (8) bei im wesentlichen geschlossenem Dach (2) mit aufwärts gestellten heckseitigen Spannbügeln (11) geöffnet ist.

8. Cabriolet-Fahrzeug nach einem der Ansprüche 1 bis 7, **dadurch gekennzeichnet, daß** das Dach (2) heckseitig von zwei in Draufsicht im wesentlichen dreiecksförmigen Spannbügeln (11) seitlich begrenzt ist, denen eine Heckscheibe (12) vor- und zwischengeordnet ist

## Claims

1. Convertible vehicle (1) having a roof (2) able to be stowed in the rear part (3) of the vehicle below a cover element (4), which roof (2), to connect it to mountings situated below the plane of the cover element (4), has lateral linkage members (5) which, when the roof (2) is raised, pass through the plane of the cover element (4) in the region of openings for passage (6) which can be covered by means of blanking members (9), the blanking members (9) comprising, on each side of the vehicle, a plurality of sub-sections (7, 8) which can each be individually actuated in the opening or closing direction as dictated by the state of opening of the roof, with at least one sub-section (7) being connected to the cover element (4) which covers the roof (2) in the lowered position and being movable relative thereto and, when the roof (2) is lowered, all the sub-sections (7, 8) of the blanking members (9) being closed, **characterised in that** the sub-sections (7, 8) comprise a sub-section (7) which is on the outside in the transverse direction of the vehicle and which is connected to the cover element (4) and a sub-section (8) which is on the inside in the transverse direction of the vehicle, and **in that**, when the roof (2) is completely raised, at least the sub-section (7) which is on the outside in the transverse direction of the vehicle is open and at least the sub-section (8) which is on the inside and which is adjacent the interior compartment is closed, which means that the width for passage which is left clear is only ever sufficiently large as is required for the state of opening at the time, the sub-section (8) which is adjacent the interior compartment being able to pivot open or closed sideways.

2. Convertible vehicle according to claim 1, **characterised in that,** when the roof (2) is in a state of opening in which one or more tensioning bows (11) which form a rear boundary thereof is or are erected, all the sub-sections (7, 8) are open.

3. Convertible vehicle according to claim 1 or 2, **characterised in that,** when the roof (2) is lowered, the sub-section (7) which is on the outside and which is connected to the cover element (4) is held in a position in which it is flush and in line with the cover element (4).

4. Convertible vehicle according to claim 3, **characterised in that,** when the roof (2) is raised, the sub-section (7) which is on the outside and which is connected to the cover element (4) is in a position where it is pivoted-in relative to the latter to leave clear an opening (6) for passage.

5. Convertible vehicle according to one of claims 1 to 4, **characterised in that** the sub-section (8) which is on the inside can be pivoted on an axis (10) which substantially follows the longitudinal lines of the vehicle and, in the open state, lies on edge and is adjacent the occupants of the vehicle.

6. Convertible vehicle according to claim 5, **characterised in that** the sub-section (8) which is adjacent the interior compartment is closed when the roof is fully lowered and when the roof (2) is fully raised.

7. Convertible vehicle according to either of claims 5 and 6, **characterised in that,** when the roof (2) is substantially raised, the sub-section (8) which is adjacent the interior compartment is opened by rear tensioning bows (11) which are moved upwards.

8. Convertible vehicle according to one of claims 1 to 7, **characterised in that,** at the rear, the lateral boundaries of the roof (2) are formed by two tensioning bows (11) which are substantially triangular when seen in plan and in front of and between which a rear window (12) is arranged.

## Revendications

1. Véhicule cabriolet (1) comprenant un toit (2) pouvant être rangé dans la zone arrière du véhicule (3) sous un capot (4), qui, pour sa liaison avec des paliers situés en dessous du plan du capot (4) présente des éléments de tringlerie latéraux (5) qui, lorsque le toit (2) est fermé, traversent le plan du capot (4) dans la zone des ouvertures de passage (6) pouvant être recouvertes par des éléments d'habillage (9),
- les éléments d'habillage (9) comprenant plusieurs sections partielles (7 ; 8) par côté de véhicule, qui peuvent être actionnées individuellement dans le sens de l'ouverture ou de la fermeture en fonction de l'état d'ouverture du toit,
- au moins une section partielle (7) reliée au capot (4) recouvrant le toit (2) en position ouverte, étant mobile par rapport à celui-ci et toutes les sections partielles (7 ; 8) des éléments d'habillage (9) sont fermées lorsque le toit (2) est ouvert,
**caractérisé en ce que**
les sections partielles (7 ; 8) comprennent une section partielle (7), extérieure dans la direction transversale du véhicule, reliée au capot (4) et une section partielle intérieure (8) dans la direction transversale du véhicule et
lorsque le toit (2) est complètement fermé, au moins la section partielle (7) extérieure dans la direction transversale du véhicule est ouverte et au moins la section partielle (8) intérieure tournée vers le volume intérieur est fermée de sorte que la section de passage qui est libérée est toujours seulement celle nécessaire pour l'état d'ouverture respectif, et la section partielle (8) tournée vers le volume intérieur peut basculer latéralement dans le sens de l'ouverture ou de la fermeture.

2. Véhicule convertible selon la revendication 1,
**caractérisé en ce qu'**
à un état d'ouverture du toit (2), dans lequel un ou plusieurs étriers de tension (11) délimitant celui-ci côté arrière est, ou sont dressés, toutes les sections partielles (7 ; 8) sont ouvertes.

3. Véhicule convertible selon la revendication 1 ou la revendication 2,
**caractérisé en ce que**
la section partielle (7) extérieure reliée au capot (4) est maintenue dans une position nette, parallèle par rapport au capot (4) lorsque le toit (2) est ouvert.

4. Véhicule convertible selon la revendication 3,
**caractérisé en ce que**
la section partielle (7) extérieure reliée au capot (4) est pivotée vers l'intérieur par rapport à celui-ci pour libérer une ouverture de passage (6) lorsque le toit (2) est fermé.

5. Véhicule convertible selon l'une des revendications 1 à 4,
**caractérisé en ce que**
la section partielle (8) intérieure peut être pivotée autour d'un axe (10) suivant pour l'essentiel la direction longitudinale du véhicule, et à l'état ouvert, elle est sur chant et en regard des passagers.

6. Véhicule convertible selon la revendication 5,
**caractérisé en ce que**
la section partielle (8) située en regard de l'espace intérieur est fermée lorsque le toit (2) est complètement ouvert ou complètement fermé.

7. Véhicule convertible selon l'une des revendications 5 ou 6,
**caractérisé en ce que**
la section partielle (8) située en regard de l'espace intérieur est ouverte avec des étriers de tension (11) côté arrière, dressés lorsque le toit (2) est pour l'essentiel fermé.

8. Véhicule convertible selon l'une des revendications 1 à 7,
**caractérisé en ce que**
le toit (2), côté arrière, est délimité latéralement par deux étriers de tension (11) de forme pour l'essentiel triangulaire en vue de dessus, devant lesquels et entre lesquels est disposée une lunette arrière (12).
